Europäisches Patentamt

European Patent Office

Office européen des brevets

(11) Publication number: **0 151 184**
**B1**

(12) **EUROPEAN PATENT SPECIFICATION**

(45) Date of publication of patent specification: **14.03.90**

(21) Application number: **84901414.7**

(22) Date of filing: **04.04.84**

(86) International application number:
**PCT/JP84/00165**

(87) International publication number:
**WO 84/03962 11.10.84 Gazette 84/24**

(51) Int. Cl.⁵: **G 05 B 19/405, G 05 B 23/02**

(54) APPARATUS FOR EMPHASIZING AND DISPLAYING NC COMMAND PROGRAM PORTION STORED AT SPECIFIC ADDRESS.

(30) Priority: **07.04.83 JP 61091/83**

(43) Date of publication of application:
**14.08.85 Bulletin 85/33**

(45) Publication of the grant of the patent:
**14.03.90 Bulletin 90/11**

(84) Designated Contracting States:
**DE FR GB**

(56) References cited:
**DE-A-3 245 610**
**GB-A-2 054 909**
**JP-A-5 537 250**
**JP-A-5 755 407**

**IBM TECHNICAL DISCLOSURE BULLETIN, vol. 15, no. 7, December 1972, page 2136, New York, US; G.T. WEBB: "Combination of alphanumeric and formatting data on CRT display"**

(73) Proprietor: **FANUC LTD**
**3580, Shibokusa Aza-Komanba Oshino-mura Minamitsuru-gun Yamanashi 401-05 (JP)**

(72) Inventor: **MIYATA, Mitsuto**
**1768-149, Yugi Hachioji-shi**
**Tokyo 192 (JP)**
Inventor: **FUKUDA, Masahiko**
**3-27, Tamadaira Hino-shi**
**Tokyo 191 (JP)**

(74) Representative: **Billington, Lawrence Emlyn et al**
**HASELTINE LAKE & CO Hazlitt House 28 Southampton Buildings Chancery Lane London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to apparatus for providing an emphasized display of a specified command of an NC (Numerical Control) program, and more particularly but not exclusively to a technique for accentuating the display of a command specified from a keyboard when displaying, on a display, an NC program stored in a bubble memory or the like of NC equipment.

For example, in the case of checking an NC program, the situation occasionally arises where it would be desirable to verify where a specific command has been given. In such a case, it is the general practice in the prior art to find, by visual examination, the specific command in the entire program after printing out all the contents of the NC program or while turning over displayed pictures of the NC program provided on a display. As a man of experience knows, however, this task is not easy to perform accurately and the command it is desired to locate often escapes notice.

GB—A—2 054 909 discloses display apparatus for displaying an NC program comprising a series of commands each in the format of a command type followed by associated data, wherein a command in a displayed single line of an NC program can be emphasised by a key-positioned cursor which may flash, frame or underline the command.

According to the present invention there is provided display apparatus for displaying an NC program comprising a series of commands each in the format of a command type followed by associated data, said apparatus comprising a memory for storing the NC program, a display for displaying the NC program, and emphasised display input means which can be employed in emphasising a command in the NC program, as compared with the other commands, when the program is displayed, the display apparatus being characterised by specified command input means operable to input at least command types, and specified command type select means operable to select, when supplied with inputs from the emphasised display input means and the specified command input means, from the NC program stored in the NC program memory a command type specified by the specified command input means such that in the displayed NC program all commands of the type selected by the specified command type select means will be emphasised as compared with the other commands in the displayed NC program.

All commands of the type selected may therefore be displayed in vivid contrast to the remainder of the NC program.

For a better understanding of the invention and to show how it may be put into effect reference will now be made by way of example to the accompanying drawings in which:

Fig. 1 is a diagram explanatory of an arrangement according to the present invention;

Fig. 2 is a block diagram illustrating the principal part of an example of the hardware structure of a unit embodying the present invention;

Figs. 3 and 4 are flowcharts showing examples of the software structure of the unit embodying the present invention; and

Fig. 5 is a block diagram illustrating an example of the hardware structure of a unit for providing an accentuated display of a specified command type by changing brightness.

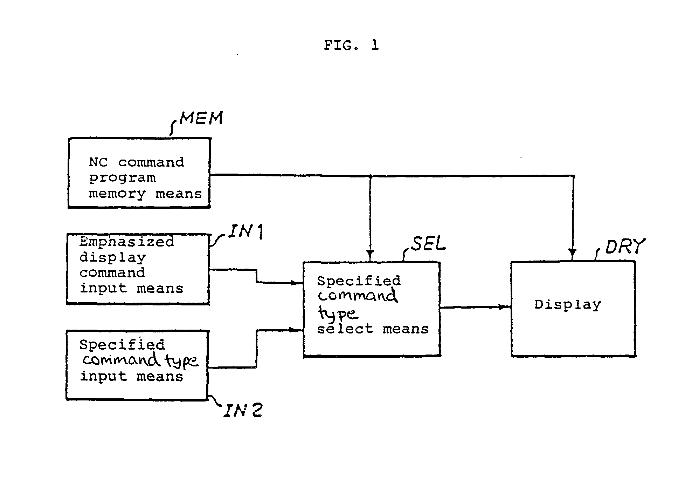

Fig. 1 is a diagram explanatory of an arrangement according to the present invention. NC command program memory means MEM has stored therein an NC command program, and a specified command type select means SEL, when supplied with an input from emphasised display command input means IN1, selects from the stored NC program all commands of the type specified by specified command type input means IN2.

Then the NC program stored in the NC program memory means MEM is displayed on a display DRY, with all commands of the selected type being accentuated in vivid contrast to the other portions of the NC program.

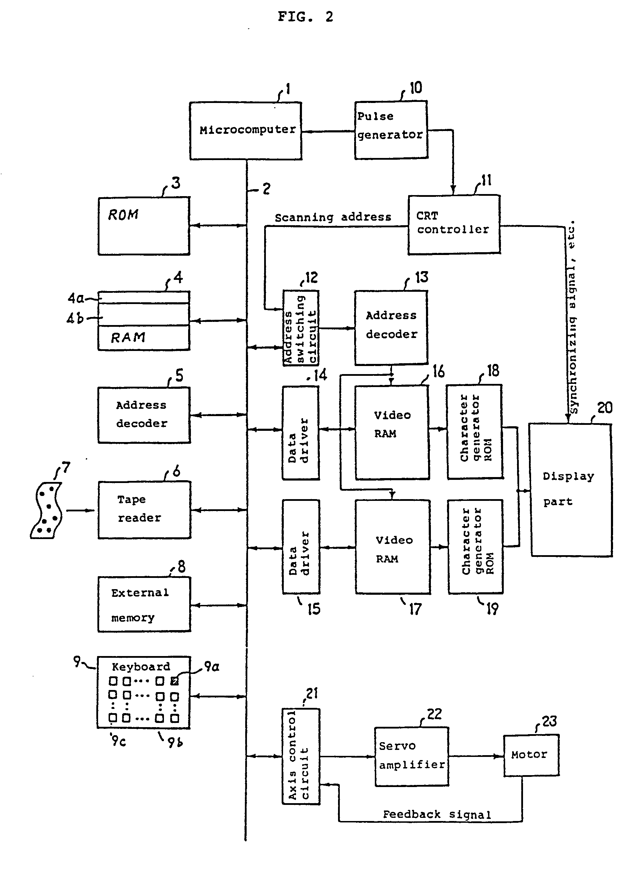

Fig. 2 is a block diagram illustrating the principal part of an example of the hardware structure of a unit embodying the present invention. Reference numeral 1 indicates a microcomputer, 2 its bus, 3 a ROM having stored therein a program or the like necessary for the microcomputer 1 to execute predetermined operations, 4 a RAM having a temporary input buffer area 4a, a running information buffer area 4b and so forth, 5 an address decoder, 6 a tape reader, 7 a command tape, 8 an external memory such as a magnetic bubble memory or the like, 9 a keyboard provided with an emphasised display command key 9a, other command keys 9b and a plurality of character input keys 9c, 10 a pulse generator, 11 a CRT controller, 12 an address switching circuit, 13 an address decoder, 14 and 15 data drivers, 16 a normal color video RAM, 17 an emphasizing color video RAM, 18 and 19 character generator ROMs, 20 a display part such as a CRT or the like, 21 an axis control circuit, 22 a servo amplifier, and 23 a motor. An NC program, when provided in the form of the command tape 7, is read into the microcomputer 1 via the tape reader 6, and when provided in a state in which it is stored in the external memory 8, it is read out directly therefrom. In the following description, let it be assumed, for convenience of explanation, that the NC program is stored in the external memory 8. In ordinary numerical control, the microcomputer 1 reads out the NC program from the external memory 8 block by block and interprets it and, in accordance with running information produced on the basis of the result of interpretation, controls the axis control circuit 21, controlling the rotation of the motor 22 via the servo amplifier 22.

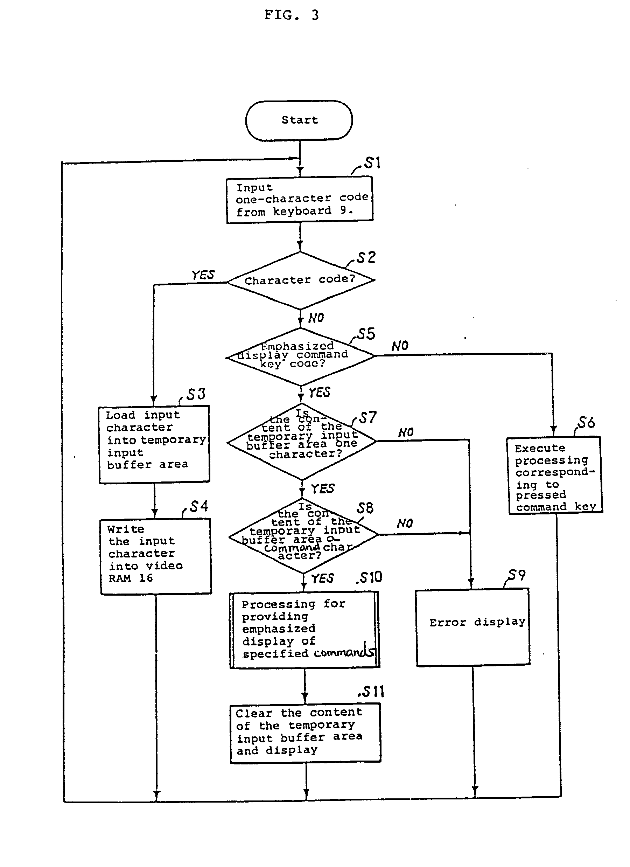

Fig. 3 is a flowchart showing an example of the software structure of the unit embodying the present invention. A description will be given, with reference to Fig. 3, of the specified command type accentuating display function of the unit embodying the present invention.

At first, when an alphabetic character indicating a type of command which it is desired to display in an emphasized manner is entered through using the character input keys 9c on the keyboard 9, the microcomputer 1 reads out its input key code (S1) and discriminates whether it is a character code or not (S2). In this case, since the input key code is a character code, the microcomputer 1 loads the input character in the temporary input buffer area 4a of the RAM 4 (S3) and, at the same time, writes the input character, for instance, via the data driver 14 into the normal color video RAM 16 at a predetermined position, for example at a position which corresponds to the lower end portion of a display screen (S4). The contents of the video RAMs 16 and 17 are being cyclically applied, by scanning addresses from the CRT controller 11, to the display part 20 via the character generator ROMs 18 and 19, so that the contents of the temporary input buffer area 4a are displayed on the display screen of the display part 20. This is intended for facilitating recognition. Incidentally, the output of the video RAM 16 is converted into a video signal of an ordinary color, for example, green, and the output of the video RAM 17 is converted into a video signal of an emphasized color, for instance, red. Accordingly, the character written into the video RAM 16 is displayed in green and the character written into the video RAM 17 in red, and a character written in the both video RAMs at the same address is displayed in yellow.

Next, when the emphasized display command key 9a of the keyboard 9 is pressed, the microcomputer 1 inputs its key code (S1) and performs the discriminations of steps S2 and S5, discriminating that the input key is the emphasized display command key 9a. Incidentally, when the other kinds of command keys are input, processing corresponding to the input keys is carried out (S6).

When it is discriminated in step S5 that the input key is the emphasized display command key, it is then checked whether the content of the temporary input buffer area 4a is one character or not and whether the stored content is a command character or not (S7, S8), and when it is neither one character nor a command character, an error display is produced (S9). This takes into account that a command type in the NC program is usually one alphabetic character and that not all the characters can be command types. When it is discriminated in step S8 that the stored content of the temporary input buffer area is a command character, an emphasized display of the specified command type is produced (S10), after which the content of the temporary input buffer area 4a and the display are cleared (S11).

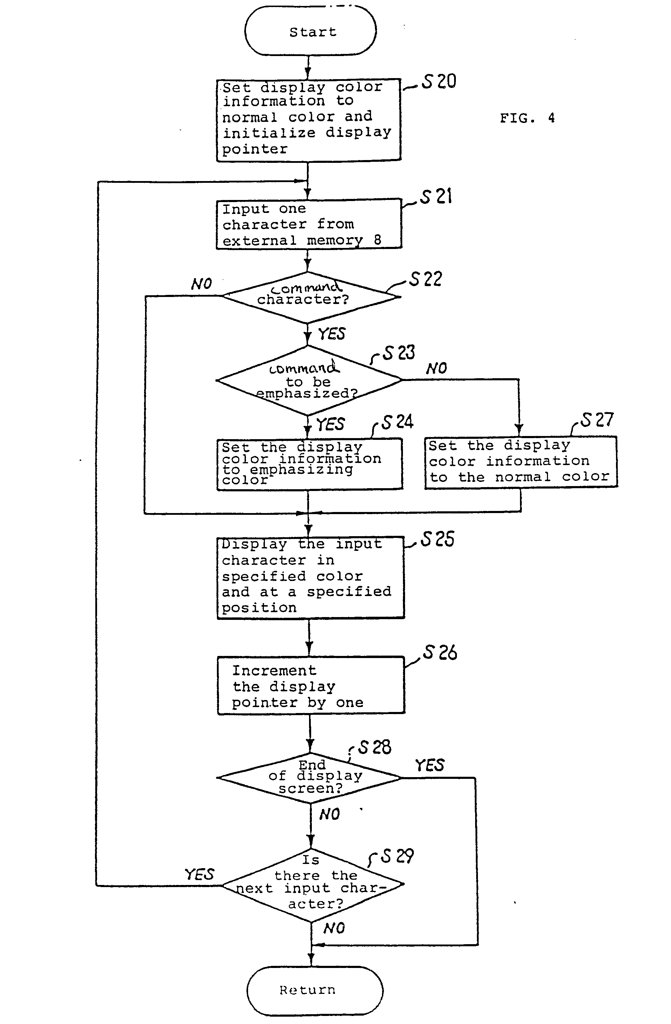

Fig. 4 is a flowchart showing an example of software for implementing the emphasized display processing function. Upon starting the emphasized display processing, the microcomputer 1 makes display color information set in the RAM 4 ordinary-color and, at the same time, sets a pointer, which indicates a display position similarly set in the RAM 4, to a value corresponding to the left upper corner of the display screen, for instance (S20). Then the microcomputer reads, for example, the first character of the NC program stored in the external memory 8 (S21) and checks whether the character is a command character or not, and whether it is a command to be displayed or not (S22, S23). When the character thus read out is a command character and a command to be emphasized, that is, when it coincides with the command type stored in the temporary input buffer area 4a, display color information is set to an emphasizing color (S24) and the input character is written into an area of the emphasizing color video RAM 17 indicated by a pointer (S25), after which the value of the pointer is incremented by one (S26).

If the character read out is not a command character, the process proceeds to step S25 (S21), and when the read out character is not a command to be emphasized, the display color information is set to an ordinary color (S27).

Assuming that an NC command program such, for example, as follows:

```
N1G91G00X123Y456T01:
N2G43Z78H01:
N3G01Z91F23:
N4G00Z-91T02:
N5G01Z91F32:
N6G00Z-91T03:
N7G01Z91F44:
N8G00Z-91T01:
     .
     .
     .
```

is stored in the external memory 8 and that the emphasized display command key 9a is pressed following the inputting of "F" which is a command type for the feed rate, commands F23, F32 and F44 are displayed in a color (for the sake of convenience, indicated in bold letters in this example) different from the color in which the other portions of the NC program are displayed, as shown below.

```
N1G91G00X123Y456T01:
N2G43Z78H01:N3G01Z91F23:
N4G00Z-91T02:
N5G01Z91F32:
N6G00Z-91T03:
N7G01Z91F44:
N8G00Z-91T01:
```

Thus it is clear at a glance where and what feed rate commands have been issued.

While the above embodiment has been described in connection with the case of producing a color display by the employment of the video RAMs 16 and 17 corresponding to colors, it is a matter of course that color display methods other than the above-described can be utilized.

Further, as the means for displaying the specified commands in vivid contrast to the other NC program portions, it is also possible to use, other than the method of providing the displays in different colors, a method of increasing the brightness of the display of the specified commands as compared with that of the other NC program portions.

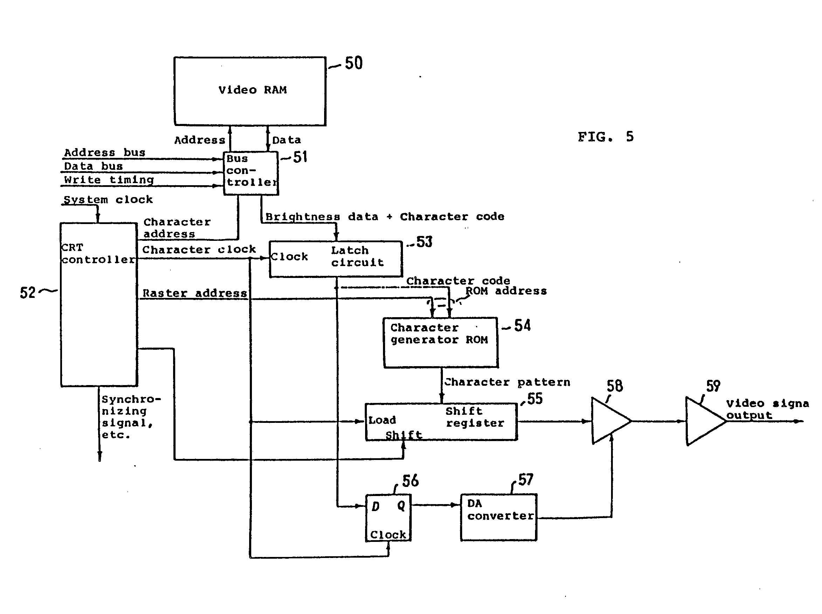

Fig. 5 illustrates an example of the hardware structure of a unit which provides an emphasized display of the specified commands by increasing their brightness. Reference numeral 50 indicates a video RAM, 51 a bus controller, 52 a CRT controller, 53 a latch circuit, 54 a character generator ROM, 55 a shift register, 56 a flip-flop, 57 a DA converter, 58 a brightness modulating amplifier and 59 a driver.

Let it be assumed that character data is represented by, for instance, one byte, for example, seven lower-order seven bits being a code representing the type of the character (for example, an ASCii code) and the most significant bit being data representing brightness. A microcomputer, not shown writes such a character code into the video RAM 50. The display is produced in the following manner:

At first, the brightness data of the character and the character code, read out from the video RAM 50 by a character address (a scanning address) output from the CRT controller 52, are latched in the latch circuit 53. By the character code and a raster address output from the CRT controller 52, a display pattern of a raster of the latched character to be displayed is provided to the shift register 55. The shift register 55 sets this display pattern using a character clock as a word signal and performs a shift operation in synchronism with a dot clock, thereby providing data on each dot on the raster to the brightness modulating amplifier 58.

Further, the output of the flip-flop 56, which is supplied with the brightness data latched in the latch circuit 53, is converted by the DA converter into an analog quantity, obtaining a voltage corresponding to the brightness of the character. The amplifier 58 has its gain controlled by the voltage, so that the dot data, the amplitude of which varies with the brightness, is provided via the driver 59 to a video signal output terminal. Accordingly, brightness modulations can be effected character by character. Then, by performing brightness change control in place of the color change control in the flowchart of Fig. 4, the brightness of only the specified commands can be increased.

Incidentally, the flip-flop 56 in Fig. 5 is provided for delaying the brightness data for one clock in accordance with a delay of one clock which occurs in the time interval between the latching of the character data and the loading of the character pattern into the shift register 55. In this example, the brightness data has only one bit, but, for instance, by forming one character by 16 bits and by assigning a plurality of bits to the brightness data, a multilevel brightness modulation is also possible.

As described above, by specifying only a command type which is to be displayed in an accentuated manner and by inputting an emphasized display command, only that type of command of an NC program is displayed in vivid contrast to the other portions of the NC program, allowing much ease in the verification of the desired type of command. Moreover, since the other NC program portions are also displayed at the same time as the specified commands, there is an advantage that the specified commands can be recognized in the context of the whole program. For example, in numeral control of a machining center system, in the case of an NC program including a command G90 to the effect that the succeeding move command represents the absolute position of coordinates and a command G91 to the effect that the succeeding move command represents the amount of relative movement from the current position, such, for example, as G90G00X100: and Y200G91Z300, move commands for the X- and the Y-axis are absolute commands and a move command for the Z-axis is an incremental command, but, for example, even if the Z-axis is note, the amount of movement in the Z-axis cannot be known accurately unless it is known whether the command therefor is before or behind the command G91. With the present invention, however, such a problem need not arise, as described previously.

## Claims

1. Display apparatus for displaying an NC program, comprising a series of commands each in the format of a command type followed by associated data, said apparatus comprising a memory (MEM, 8) for storing the NC program, a display (DRY, 20) for displaying the NC program, and emphasised display input means (IN1) which can be employed in emphasising a command in the NC program, as compared with the other commands, when the program is displayed, the display apparatus being characterised by specified command input means (IN2, 9) operable to input at least command types, and specified command type select means (SEL, 1) operable to select, when supplied with inputs from the emphasised display input means (IN1) and the specified command input means (IN2, 9), from the NC program stored in the NC program memory (MEM, 8) a command type specified by the specified command input means (IN2, 9) such that in the displayed NC program all commands of the type selected by the specified command type select means (SEL, 1) will be emphasised as compared with the other commands in the displayed NC program.

2. Display apparatus according to claim 1, which is adapted to emphasise the commands of the type selected by displaying them in a color different from the remainder of the displayed NC program.

3. Display apparatus according to claim 1, which is adapted to emphasise the commands of the type selected by displaying them brighter than the remainder of the displayed NC program.

## Patentansprüche

1. Anzeigevorrichtung zum Anzeigen eines Programms für eine numerische Steuerung, das eine Reihe von Befehlen umfaßt, wovon jeder das Format eines Befehlstyps hat, dem zugeordnete Daten folgen, wobei die Anzeigevorrichtung enthält:

—einen Speicher (MEM, 8) zum Speichern des Programms für die numerische Steuerung,

—einen Anzeigeteil (DRY, 20) zum Anzeigen des Programms für die numerische Steuerung und

—ein Eingabemittel (IN1) für eine hervorgehobene Anzeige, das zum Hervorheben eines Befehls im Vergleich zu den anderen Befehlen in dem Programm für die numerische Steuerung benutzt werden kann, wenn das Programm angezeigt wird,

welche Anzeigevorrichtung gekennzeichnet ist durch

—ein Eingabemittel (IN2, 9) für spezifizierte Befehle, das betätigbar ist, um zumindest Befehlstypen einzugeben, und

—ein Auswahlmittel (SEL, 1) für spezifizierte Befehlstypen, das betätigbar ist, um, wenn ihm Eingangssignale von dem Eingabemittel (IN1) für eine hervorgehobene Anzeige und dem Eingabemittel (IN2, 9) für spezifizierte Befehle zugeführt werden, aus dem Programm für die numerische Steuerung, das in dem Speicher (MEM, 8) zum Speichern des Programms für die numerische Steuerung gespeichert ist, einen Befehlstyp, der durch das Eingabemittel (IN2, 9) für spezifizierte Befehle spezifiziert ist, derart auszuwählen, daß in dem angezeigten Programm für die numerische Steuerung alle Befehle des Typs, der durch das Auswahlmittel (SEL, 1) für spezifizierte Befehlstypen ausgewählt ist, verglichen mit den anderen Befehlen in dem angezeigten Programm für die numerische Steuerung hervorgehoben werden.

2. Anzeigevorrichtung nach Anspruch 1, die dazu bestimmt ist, die Befehle des Typs, der ausgewählt ist, durch Anzeigen derselben in einer Farbe, die unterschiedlich von derjenigen des Rests des angezeigten Programms für die numerische Steuerung ist, hervorzuheben.

3. Anzeigevorrichtung nach Anspruch 1, die dazu bestimmt ist, die Befehle des Typs, der ausgewählt ist, durch Anzeigen derselben mit einer Helligkeit, die größer als diejenige des Rests des angezeigten Programms für die numerische Steuerung ist, hervorzuheben.

## Revendications

1. Dispositif d'affichage pour l'affichage d'un programme CN comprenant une série de commandes chacune dans le format d'un type de commande suivi de données associées, ledit dispositif comprenant une mémoire (MEM, 8) pour mémoriser le programme CN, un affichage (DRY, 20) pour afficher un programme CN, et un moyen d'entrée d'affichage accentué (IN1) qui peut être employé dans l'accentuation d'une commande dans le programme CN, comparée aux autres commandes, lorsque le programme est affiché, le dispositif d'affichage étant caractérisé par un moyen d'entrée de commande spécifié (IN2, 9) commandable pour entrer au moins des types de commande, et un moyen de sélection de type de commande spécifiée (SEL, 1) commandable pour sélectionner, lorsqu'il est alimenté avec des entrées provenant du moyen d'entrée d'affichage accentué (IN1) et du moyen d'entrée de commande spécifiée (IN2, 9) provenant du programme CN mémorisé dans la mémoire de programme CN (MEM, 8), un type de commande spécifiée par le moyen d'entrée de commande spécifiée (IN2, 9) tel que dans le programme CN affiché toutes les commandes du type sélectionné par le moyen de sélection de type de commande spécifiée (SEL, 1) seront accentuées comparées aux autres commandes dans le programme CN affiché.

2. Dispositif d'affichage selon la revendication 1, qui est prévu pour accentuer les commandes du type sélectionné en affichant celles-ci dans une couleur différente du restant du programme CN affiché.

3. Dispositif d'affichage selon la revendication 1, qui est prévu pour accentuer les commandes du type sélectionné en affichant celles-ci de manière plus brillante que le restant du programme CN affiché.

FIG. 1

FIG. 2

# EP 0 151 184 B1

FIG. 3

```
                        ( Start )
                            │
                            ▼                    S1
                   ┌──────────────────┐
                   │ Input            │
                   │ one-character code│
                   │ from keyboard 9. │
                   └──────────────────┘
                            │
                            ▼                    S2
          YES          ◇ Character code? ◇
    ┌────────────────                │
    │                               NO
    │                                ▼                      S5
    │                     ◇ Emphasized          ◇    NO
    │                       display command          ────────────┐
    │                       key code?                             │
    │                                │                            │
    │                               YES                           │
    ▼          S3                     ▼          S7               │
┌──────────────┐          ◇ Is the con-   ◇   NO                  │       S6
│ Load input   │            tent of the        ─────────┐   ┌──────────────┐
│ character    │            temporary input              │   │ Execute      │
│ into temporary│           buffer area one              │   │ processing   │
│ input        │            character?                   │   │ correspond-  │
│ buffer area  │                │                        │   │ ing to       │
└──────────────┘               YES                       │   │ pressed      │
    │                           ▼          S8             │   │ command key  │
    ▼          S4      ◇ Is the con-   ◇    NO            │   └──────────────┘
┌──────────────┐        tent of the        ──────────────┤           │
│ Write        │        temporary input                  │           │
│ the input    │        buffer area a                    │           │
│ character    │        command char-                    │           │
│ into video   │        acter?                            │           │
│ RAM 16       │            │                             ▼           │
└──────────────┘           YES      S10                 S9            │
    │            ┌──────────────────┐          ┌──────────────┐       │
    │            │ Processing for   │          │ Error display│       │
    │            │ providing        │          └──────────────┘       │
    │            │ emphasized       │                 │               │
    │            │ display of       │                 │               │
    │            │ specified commands│                │               │
    │            └──────────────────┘                 │               │
    │                     │          S11              │               │
    │            ┌──────────────────┐                 │               │
    │            │ Clear the content│                 │               │
    │            │ of the temporary │                 │               │
    │            │ input buffer area│                 │               │
    │            │ and display      │                 │               │
    │            └──────────────────┘                 │               │
    │                     │                           │               │
    └─────────────────────┴───────────────────────────┴───────────────┘
```

3

FIG. 4

```
        ( Start )
            │
            ▼
┌─────────────────────┐  ─ S20
│ Set display color   │
│ information to      │
│ normal color and    │
│ initialize display  │
│ pointer             │
└─────────────────────┘
            │
            ▼
┌─────────────────────┐  ─ S21
│ Input one           │
│ character from      │
│ external memory 8   │
└─────────────────────┘
            │
            ▼
     ◇ Command ◇  ── S22
  NO ◇ character? ◇
            │ YES
            ▼
     ◇ command ◇  ── S23
     ◇ to be ◇  NO
     ◇ emphasized? ◇
       YES │          │
           ▼          ▼
┌──────────────┐ S24  ┌──────────────┐ S27
│ Set the      │      │ Set the      │
│ display      │      │ display      │
│ color info   │      │ color info   │
│ to emphasiz- │      │ to the       │
│ ing color    │      │ normal color │
└──────────────┘      └──────────────┘
            │
            ▼
┌─────────────────────┐  ─ S25
│ Display the input   │
│ character in        │
│ specified color     │
│ and at a specified  │
│ position            │
└─────────────────────┘
            │
            ▼
┌─────────────────────┐  ─ S26
│ Increment           │
│ the display         │
│ pointer by one      │
└─────────────────────┘
            │
            ▼
     ◇ End ◇  ── S28
     ◇ of display ◇  YES
     ◇ screen? ◇
            │ NO
            ▼
     ◇ Is ◇  ── S29
 YES ◇ there the ◇
     ◇ next input char- ◇
     ◇ acter? ◇
            │ NO
            ▼
        ( Return )
```

4

FIG. 5

Video RAM ~50

Address   Data

Address bus
Data bus
Write timing
System clock

Bus con- troller ~51

Brightness data + Character code

CRT controller

52~

Character address
Character clock

Raster address

Synchro- nizing signal, etc.

Clock   Latch circuit ~53

Character code
ROM address

Character generator ROM ~54

Character pattern

Load   Shift register ,55
Shift

58        59        Video signal output

56        57

D   Q      DA converter
Clock